# EUROPEAN PATENT APPLICATION

(11) **EP 2 672 182 A2**
(43) Date of publication of application: **11.12.2013**
(21) Application number: 13170468.6
(22) Date of filing: 04.06.2013
(51) Int. Cl.: F23R 3/00

(54) **Impingment cooled combustor**

(30) Priority: 05.06.2012 US 201213488465
(71) Applicant: General Electric Company, Schenectady, New York 12345 (US)
(72) Inventor: Kraemer, Gilbert Otto, Greenville, South Carolina 29615 (US)
(74) Representative: Cleary, Fidelma

(57) **Abstract**

The present application thus provides a combustor (100) for use with a gas turbine engine. The combustor may include a turbine nozzle (110) and a liner cooling system (160) integral with the turbine nozzle. The liner cooling system (160) may include a liner (170) with one or more cooling features thereon and an impingement sleeve (180).

## Description

The present application and the resultant patent relate generally to gas turbine engines and more particularly relate to a gas turbine engine having a combustor with a liner cooling system in a jet stirred design and the like that may be capable of meeting mandated emission levels and desired output requirements over a variable range of fuels.

### BACKGROUND OF THE INVENTION

Operational efficiency in a gas turbine engine generally increases as the temperature of the hot combustion gas stream increases. Higher combustion gas stream temperatures, however, may result in the production of higher levels of nitrogen oxides (NOₓ) and other types of undesirable emissions. Such emissions may be subject to both federal and state regulations in the United States and also may be subject to similar regulations abroad. Moreover, financing of gas turbine engines and power plants often may be subject to international emissions standards. A balancing act thus exists between operating a gas turbine engine within an efficient temperature range while also ensuring that the output of nitrogen oxides and other types of regulated emissions remain well within mandated levels. Many other types of operational parameters also may be varied in providing such an optimized balance.

Operators of gas turbine engines and the like may prefer to use different types of fuels at different times depending upon availability and price. For example, liquid fuels such as heavy fuel oil may be readily available in certain locales at certain times. Heavy fuel oil, however, may have a high level of conversion to nitrogen oxides above certain combustion temperatures. Specifically, liquid fuels such as heavy fuel oil may be high in fuel bound nitrogen. As a result, such fuels generally may require the use of selective catalytic reduction and the like to reduce the level of emissions. Such processes, however, may add to the overall operating costs and the overall complexity of the gas turbine engine.

There is thus a desire for a combustor for a gas turbine engine capable of efficiently combusting various types of fuels from natural gas to liquid fuels while maintaining overall emissions compliance. Preferably such a combustor may be adequately cooled for a long component lifetime without compromising efficient overall operations and output.

The present application and the resultant patent thus provide a combustor for use with a gas turbine engine. The combustor may include a turbine nozzle and a liner cooling system integral with the turbine nozzle. The liner cooling system may include a liner with one or more cooling features thereon and an impingement sleeve.

The present application and the resultant patent further provide a method of cooling a combustor. The method may include the steps of defining a combustion zone with a liner cooling system that is integral with a turbine nozzle, flowing air about a head end of the combustor so as to impingement cooler a liner of the liner cooling system through an impingement sleeve, and further cooling the liner via one or more liner surface cooling features.

The present application and the resultant patent further may provide a jet stirred combustor for use with a gas turbine engine. The jet stirred combustor may include a stage one nozzle and a liner cooling system integral with the stage one nozzle. The liner cooling system may include a liner with one or more cooling features thereon, an impingement sleeve, and an air gap therebetween.

These and other features and improvements of the present application and the resultant patent will become apparent to one of ordinary skill in the art upon review of the following detailed description when taken in conjunction with the several drawings and the appended claims.
Fig. 1 is a schematic diagram of a gas turbine engine having a compressor, a combustor, and a turbine.
Fig. 2 is a schematic diagram of a combustor that may be used with the gas turbine engine of Fig. 1.
Fig. 3 is a perspective view of a portion of a combustor as may be described herein.
Fig. 4 is a top perspective view of a liner cooling system of the combustor of Fig. 3.
Fig. 5 is a bottom perspective view of the liner cooling system of the combustor of Fig. 3.
Fig. 6 is a front plan view of the liner cooling system of the combustor of Fig. 3.
Fig. 7 is a side perspective view of the liner cooling system of the combustor of Fig. 3.
Fig. 8 is a perspective view of a portion of the liner of the combustor of Fig. 3.
Fig. 9 is a perspective view of a number of combustor sections as may be described herein.

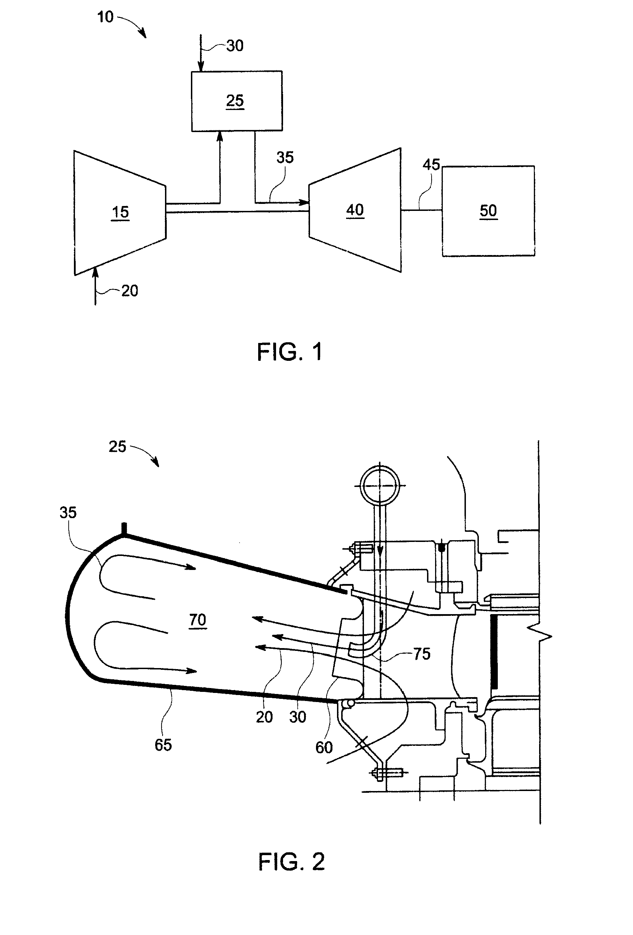

Referring now to the drawings, in which like numerals refer to like elements throughout the several views, Fig. 1 shows a schematic diagram of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The combustor 25 of the gas turbine engine 10 may use natural gas, liquid fuels, various types of syngas, and/or other types of fuels. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

Fig. 2 shows an example of the combustor 25 that may be used in the gas turbine engine 10 described above and the like. In this example, the combustor 25 may have a jet stirred-type design or a similar type of reverse flow design. The combustor 25 may be integral with a turbine nozzle 60. The turbine nozzle 60 may be a stage one nozzle. The combustor 25 may include an annular combustion liner 65 extending from the turbine nozzle 60. The annular combustion line 65 may define a combustion zone 70 therein. A fuel injector 75 may be positioned about the nozzle 60 to provide the flow of the fuel 30. The flow of fuel 30 and the flow of air 20 from the compressor 15 or elsewhere may be introduced into the combustion zone 70 about the turbine nozzle 60. The flows of fuel 30 and air 20 may be injected in a direction opposite that of the hot combustion gas flow 35 for good mixing therewith. The combustor 25 described herein is for the purpose of example only. Many other types of combustors, combustor components, and combustor configurations also may be known.

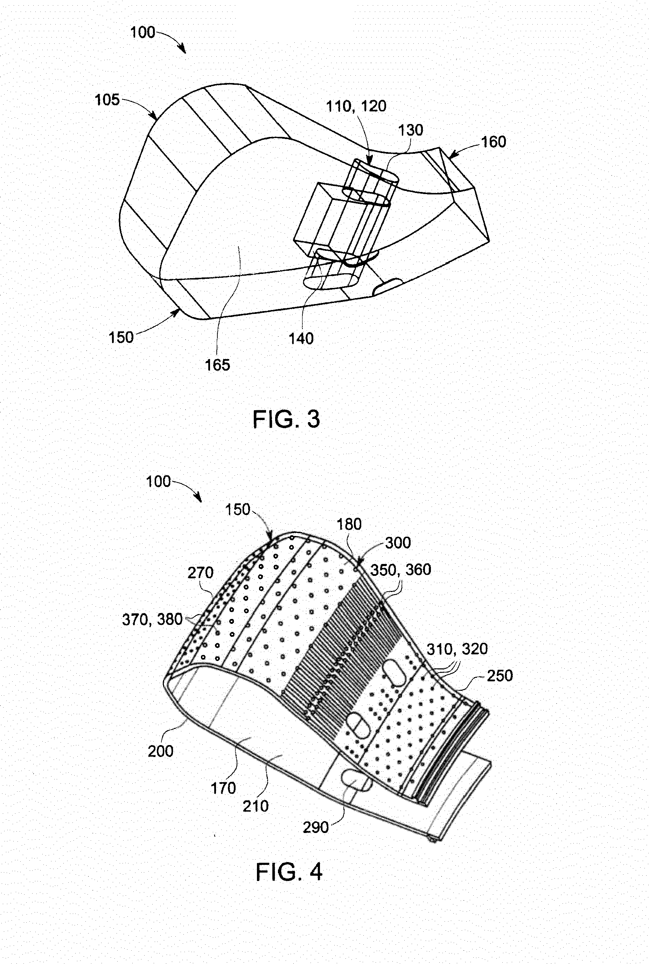

Fig. 3 shows an example of an annular combustor 100 as may be described herein. Similar to that described above, each segment 105 of the combustor 100 may be integral with a turbine nozzle 110. In this example, the turbine nozzle 110 may be a stage one nozzle 120. The turbine nozzle 100 may include a fuel manifold 130 in communication with the flow of fuel 30. The turbine nozzle 110 also may include a fuel injector 140 in communication with the fuel manifold 130. The flow of fuel 30 and the flow of air 20 from the compressor 15 or elsewhere may be introduced about the turbine nozzle 120. The combustor 100 described herein may be compact, high intensity, as well as a low emissions combustor, *i.e*., a type of a jet stirred combustor 150 or similar types of reverse flow designs. Other components and other configurations also may be used herein.

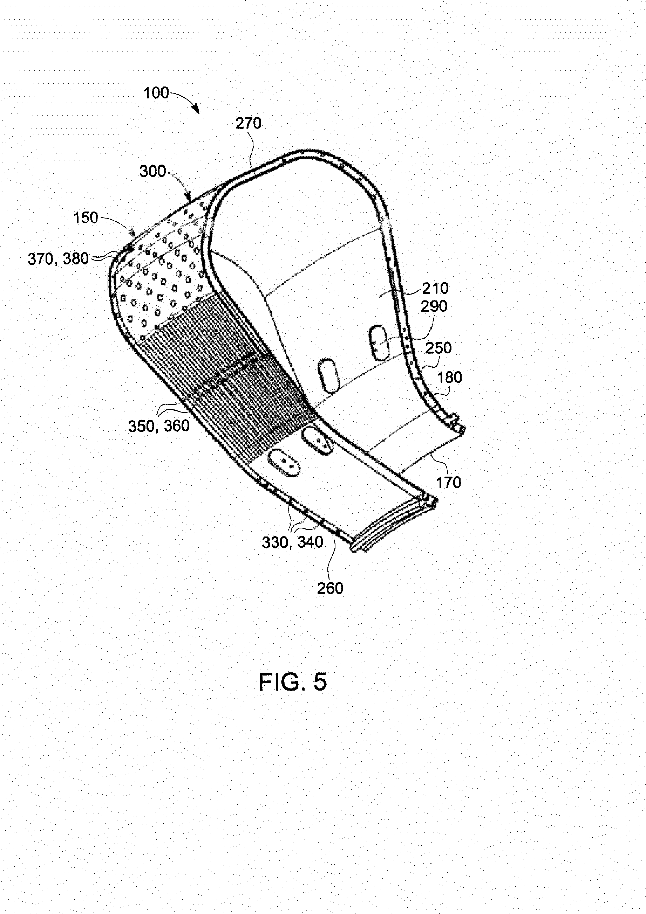

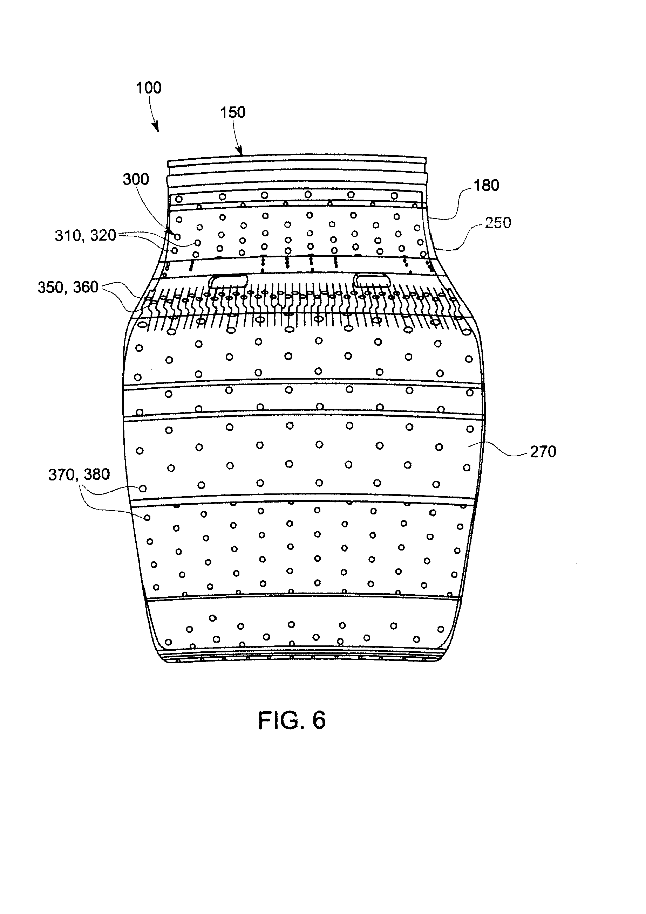

Figs. 4-8 show a liner cooling system 160 as may be described herein for use with the combustor 100. The liner cooling system 160 may define a combustion zone 165 therein. The liner cooling system 160 may include an inner liner 170 and an outer impingement sleeve 180. The liner 170 and the impingement sleeve 180 may be separated by an air gap 190. The liner 170 may be made out of a Hastelloy X material (a nickel, chrome, iron alloy) with a thermal barrier coating and the like. (Hastelloy X is a trademark of Haynes International, Inc. of Kokomo, Indiana.) Other types of materials may be used herein. The impingement sleeve 180 may be made out of similar materials. The thickness of the liner 170, the impingement sleeve 180, and the air gap 190 may vary. The liner 170 and the impingement sleeve 180 may have a substantially collapsed "U"-like shape 200. Other shapes and sizes may be used herein depending upon the desired flow paths, temperatures, pressures, and other types of operational parameters. Moreover, other components and other configurations also may be used herein.

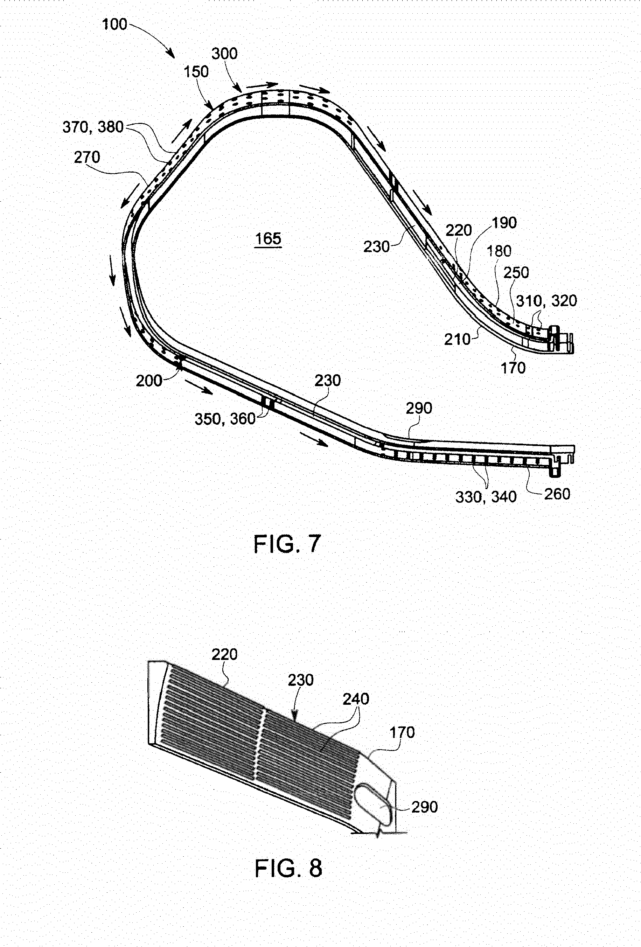

The liner 170 may include a combustion side 210 facing the combustion zone 165 and a cooling side 220 in communication with the flow of air 20 and facing the air gap 190 and the impingement sleeve 180. As is shown in Fig. 8, the cooling side 220 of the liner 120 also may have a number of cooling features 230 thereon. In this example, the cooling features 230 may take the form of a number of ribs 240. Any number of the ribs 240 may be used in any size, shape, and configuration. The ribs 240 may formed therein or otherwise positioned thereon. Any type of cooling features 230 may be used herein to increase the local surface area of the liner 170 and, hence, increase the amount of heat transferred therethrough. For example, diamond patterns, herring-bone patterns, staggered fins, and other types of patterns and structures may be used herein. Although the cooling features 230 are shown as positioned on a top side 250 and a bottom side 260 of the cooling side 220 of the liner 190, other positions including about a front or a head end 270 or elsewhere may be used herein.

The liner 170 also may have a number of diffusion holes 290 extending therethrough about the top side 250, the bottom side 260, or elsewhere. Any number of the diffusion holes 290 may be used herein in any size, shape, or configuration. Other components and other configurations also may be used herein.

The impingement sleeve 180 may include a number of impingement holes 300 extending therethrough. Any number of the impingement holes 300 may be used herein in any size, shape, or configuration. As is shown, a number of top impingement holes 310 may be used with one or more top diameters 320 as well as a number of bottom impingement holes 330 with one or more bottom diameters 340. Likewise, a number of cooling feature holes 350 may be positioned about the cooling features 230 of the liner 170 with one or more cooling feature hole diameters 360. Further, a number of head end impingement holes 370 may be positioned about the head end 270 of the liner 170 with one or more head end impingement hole diameters 380. The number of the impingement holes 300 thus may vary according to the position with respect to the liner 170. Likewise, the size, shape, and configuration of the impingement holes 300 also may vary so as to provide efficient cooling to that specific section of the liner 170 in consideration with a local pressure drop and other operational parameters. As is shown in Fig. 7, the flow direction may be from the head end 270 towards the turbine 40. Many different configurations of the impingement holes 300 as well as combinations of configurations may be used and optimized herein.

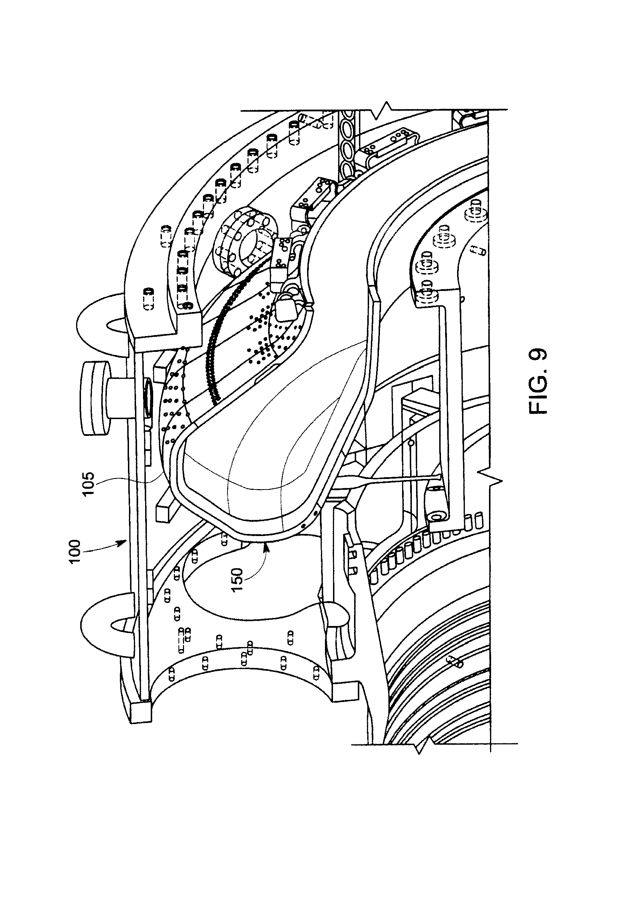

As is shown in Fig. 9, each section 105 of the combustor 100 may be joined together to form the overall combustor 100. Any number of the sections 105 may be used herein. The sections 105 may be joined in any type of conventional manner. The sections 105 may have varying sizes, shapes, and configurations as well as variations in the respective liner cooling systems 160.

In use, a flow of air 20 from the compressor 15 or otherwise flows across the liner cooling system 160. Specifically, the flow of air 20 flows through the impingement holes 300 of the impingement sleeve 180 so as to provide impingement cooling to the liner 170. The flow of air 20 thus provides impingement cooling about the top 250, the bottom 260, and the head end 270 of the liner 170 as well as about the liner cooling features 230. The amount of cooling may depend upon the number, size, shape, and configuration of the impingement holes 300. Moreover, cooling of the liner 170 may be enhanced by the cooling features 230 positioned thereon. The cooling features 230 thus add cooling to different positions on the liner 170 to the extent that the impingement flows are diverted or insufficient. The liner cooling system 150 thus provides impingement cooling and enhanced surface cooling with no air penetration into the liner 170 itself so as to minimize emissions.

After cooling the liner 170, the flow of air 20 and the flow of fuel 30 then enter the combustor 100 about the turbine nozzle 110. The flow of air 20 and the flow of fuel 30 may be injected in the opposite direction to the flow of the hot combustion gases 35. As the flow of air 20 and the flow of fuel 30 enters the combustion zone 165, the air 20 and the fuel 30 mix with the outgoing combustion flow 35. Specifically, the flows mix, combust, and reverse direction so as dilute the combustion flow 35 and the incoming air 20. The flow of air 20 also cools the turbine nozzle 110 as it flows therethrough. Other components and other configurations may be used herein.

The combustor 100 described herein thus provides fuel flexibility across a range of gas fuels and liquid fuels. The combustor 100 also provides an extended turndown within emissions compliance. Moreover, the combustor 100 provides a simplified structure with fewer components and, hence, reduced overall costs. The compact, high intensity, low emissions combustor design with the liner cooling system 160 described herein thus provides impingement cooling as well as enhanced surface cooling for a longer component lifetime. Moreover, the combustor 100 may meet local, national, and international emission standards without the use of a catalyst and the associated costs.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. A combustor (100) for use with a gas turbine engine (10), comprising:
a turbine nozzle (110); and
a liner cooling system (160) integral with the turbine nozzle (110);
wherein the liner cooling system (160) comprises a liner (170) with one or more cooling features thereon and an impingement sleeve (180).

2. The combustor of claim 1, wherein the turbine nozzle (110) comprises a stage one nozzle (120).

3. The combustor of claim 1 or claim 2, wherein the turbine nozzle (110) comprises a fuel injector (140).

4. The combustor of claim 1, 2 or 3, wherein the combustor comprises a jet stirred combustor (150).

5. The combustor of any preceding claim, wherein the liner cooling system (160) comprises an air gap (190) between the liner (170) and the impingement sleeve (180).

6. The combustor of any preceding claim, wherein the one or more cooling features comprise a plurality of ribs (240).

7. The combustor of any preceding claim, wherein the liner (170) comprises an alloy with a thermal barrier coating thereon.

8. The combustor of any preceding claim, wherein the liner (170) comprises one or more diffusion holes.

9. The combustor of any preceding claim, wherein the impingeent sleeve (180) comprises a plurality of impingement holes.

10. The combustor of any preceding claim, wherein the plurality of impingement holes comprises a plurality of variably shaped impingement holes.

11. The combustor of any preceding claim, wherein the impingement sleeve (180) comprises a top side with a plurality of top impingement holes.

12. The combustor of any preceding claim, wherein the impingement sleeve (180) comprises a bottom side with a plurality of bottom impingement holes.

13. The combustor of any preceding claim, wherein the impingement sleeve (180) comprises a plurality of cooling feature impingement holes.

14. The combustor of any preceding claim, wherein the impingement sleeve (180) comprises a head end with a plurality of head end impingement holes.

15. A method of cooling a combustor (100), comprising:
defining a combustion zone (70) with a liner cooling system (160) that is integral with a turbine nozzle (110);
flowing air about a head end of the combustor (100) so as to impingement cooler a liner (170) of the liner cooling system (160) through an impingement sleeve (180); and
further cooling the liner (170) via one or more liner surface cooling features.
